# EUROPEAN PATENT SPECIFICATION

(11) **EP 1 099 520 B1**
(45) Date of publication and mention of the grant of the patent: **28.11.2007**
(21) Application number: 00850163.7
(22) Date of filing: 13.10.2000
(51) Int. Cl.: B25J 19/00, B25J 15/04, H01R 39/64

(54) **SWIVEL CONNECTION FOR A ROBOT**
DREHANSCHLUSS FÜR EINEN ROBOTER
SYSTEME DE CONNECTION TOURNANT POUR UN ROBOT

(30) Priority: 13.10.1999 SE 9903681
(43) Date of publication of application: 16.05.2001
(73) Proprietor: Truconex Engineering, 79596 Boda Kyrkby (SE)
(72) Inventor: Hansson, Olof, 79596 Boda Kyrkby (SE)
(74) Representative: Hytting, Kerstin Cecilia

(56) References cited:
- EP-A- 0 288 744
- EP-A- 0 863 587
- WO-A-00/36710
- DE-A- 19 533 948
- DE-U- 29 808 801
- US-A- 5 624 364
- PATENT ABSTRACTS OF JAPAN vol. 018, no. 079 (M-1557), & JP 05 293788 A

## Description

### TECHNICAL AREA

The present invention relates to a swivel for a robot according to the preamble of claim 1, said swivel comprising fastening members for attaching to the arm of a robot, a distance member arranged with circular cylindrical outer surface attached to the fastening member, fastening means arranged to said distance member for attaching of a tool, an outer sleeve slidably arranged outside said outer surface of said distance member, a plurality of electrical connections arranged between the distance member and the outer sleeve, which connections are designed so that electrical contact is achieved during turning of the distance member and the outer sleeve relative each other.

### BACKGROUND OF THE INVENTION

Industrial robots have been used commercially during some thirty years for increasing the productivity and to remove the heavy and monotone work cycles in most industrial applications. Robots are used today in a variety of areas such as painting, assembly, machining and others.

A industrial robot consists conventionally of an arm pivotably attached to a vertical pivotable pillar, where the arm is arranged with a number of joints with pivoting axes mainly transverse the longitudinal direction of the arm. At the end of the arm a tool is attached, either fixedly or exchangeable. Connections are arranged to the tool such as electrical wiring and/or pressurised air, hydraulics, process fluids and the like, which are drawn along the arm so that they are not in the way during the movement of the robot arm. Often a swivel is present between the arm and the tool, which swivel has a rotational axis directed mainly in the longitudinal direction of the arm. Earlier pivoting joints allowed a maximum turning of approximately ±360°, i e 720°, due to the connections between tool and arm. For some work parts, the tools must however need to be able to be rotated further or that it must not be rotated in the opposite direction in order to be rotated again.

One solution is thus to arrange the swivel with connections providing unlimited rotation. One embodiment developed by ABB Robotics is thereby arranged with an inner part, often with a circular cylindrical outer surface, which is attached between the arm and the tool, and which thus rotates when the tool rotates, as well as an outer part slidably arranged outside the inner part. Conduits are connected to the outer part for sources for electricity, pressurised air hydraulic oil and the like, and connections are arranged to the inner part for the tool. Drag contacts for the transfer of electricity and sealed passages for transfer of fluids are arranged between the parts.

By this design, the parts may move relative each other at the same time as electricity and fluids are being transferred. For a quick tool change, the swivel is arranged with a longitudinal hole in its centre, which hole is lightly conical. The tool is arranged with a holder with the corresponding form, and with a locking grip at its end. For strength and stability the parts of the swivel are made of construction steel, which makes the swivel relatively heavy. This weight decreases the useful load that the robot may handle. The steel further limits the transfer of electricity between the parts in that they have to be insulated. The design of the swivel according to ABB generally and in particular the tool changing unit with the elongated hole limits the inner part in that it does not have much space for the integration of functions such as for example electronic units, nodes, for digital transfer of information between tool and the contrilling unit or valve slides for controlling fluids. These have to instead be placed on the robot arm or even further away depending on the environment that the robot is working in.

For many machines there are machine parts that are in contact with each other at the same time as they are moving in relation to each other and where a transfer of electricity in the form of signals or power needs to be performed. For example, it might be machine slides moving relative to guiding surfaces, rotating chucks in machine tools and robot swivels.

In order to be able to obtain a transfer of electricity between these machine parts, usually conductive paths are used, which are attached to one of the parts while the other part is provided with a number of contacts contacting the conductive paths. Conventionally coal or graphite contacts are used, which are dragged against the conductive paths. A classic example of this is alternating current motors in most hand-held machines having this configuration.

A substantial drawback with this design is that these types of contacts are worn relatively fast and which, during the wear, produce a coal dust. Further, different types of spring elements are present, which are pressed against the conductive paths. An example of spring elements is robot swivels arranged with cooper tongues that slide with a certain angle against the conductive paths. One problem with these is when they break, in whole or partly. When they beak completely the contact is lost for natural reasons, and when the break partly the remaining part of the tongue risks tearing the conductive paths apart.

In for example applications with a limited space, such as for example robot swivels, the above mentioned solutions are not optimal because they require relatively large space because the holder devices for coals and brushes require a certain height above the conductive paths. The same applies for the copper tongues where a certain distance is required between the attachment points of these and the conductive paths.

As regards quick couplings for robots, there are different systems present on the market, which among other comprise balls in one coupling part that are moved into recesses in a second coupling part. The main function of the balls is to provide a fixed connection between the parts, but the design of the recesses and the means for pressing the balls into the recesses are designed so that they cannot manage very large moment on the coupling. In order to manage these moments the devices are arranged with shafts or pins that fit into corresponding recesses, whereby these are designed with somewhat curved surfaces in order to fit into each other and in order not to be jammed. This in turn means that the shafts and the recesses have to be produced with a relatively high precision, which makes the coupling devices more expensive.

DE 298 08 801 U discloses a device for transfer of electricity between two details, in contact with each other and movable in relation to each other, comprising a number of essentially inflexible conductive paths arranged on a carrier which carrier is intended to be attached to one of the details, a number of essentially inflexible conductive paths arranged on a second carrier, which carrier is intended to be attached to the second detail, whereby the conductive paths are in contact with each other, whereby the conductive paths stretch in the moving direction of the details. However, this prior art does not disclose how to solve the problem of how to transfer electricity between two details movable relative each other in a compact manner, which yet guarantees that the transfer is not broken or is deteriorated during a movement between the details.

EP-A-0 863 587 discloses a device transfer of electricity between two details, in contact with each other and movable in relation to each other, comprising a number of essentially inflexible conductive paths arranged on a carrier, said carrier being intended to be attached to one of the details, and a number of essentially inflexible conductive paths arranged on a second carrier, said second carrier being intended to be attached to the second detail, whereby the conductive paths are in contact with each other, whereby the conductive paths stretch in the moving direction of the details. The document further states that the respective printing boards are secured together by for example screws so that pressure is exerted in the printed wiring boards. This can not be interpreted as pressing the printing boards against each other since that would mean that the screws would clamp the circuit boards together, and then they would not be able to rotate relative each other.

Patent Abstract of Japan, vol. 018, no. 079 (M-1557), 9 February 1994 & JP 05 293788 A (DAIHEN CORP) 9 November 1993, discloses a swivel, wherein the swivel is provided with a device for transfer of electricity lacking most features of the present claim 1. Moreover, this document does not disclose any pressure means between slide contact members. This conclusion is based on the fact that a presented first detail for the weld electricity from a cable does not move relative a second detail since there seems to be a guide pin fixating the relative position between these details.

### DESCRIPTION OF THE INVENTION

The problem that the present invention intends to solve is to transfer electricity between two details of a swivel movable relative each other in a compact manner, which yet guarantees that the transfer is not broken or is deteriorated during the movement between the details.

This problem is solved by arranging elastically resilient pressure means between at least one carrier and a respective detail. In this way it is guaranteed that the conductive paths are pressed against each other with a certain pressure and that a good contact is obtained. The elastically resilient pressure means also provide a means against the influence of parallelism errors between the carriers.

According to the invention, the distance member is arranged with a cavity, which cavity stretches in the general length direction of the distance member, and that electric means are arranged in the cavity for electrical transfer between the connections and the tool. Preferably the distance member is designed mainly with the form of a circle cylindrical sleeve. Further the outer sleeve of the swivel is preferably made of a plastic material.

For transfer of electricity the device according to the invention comprises a number of essentially inflexible conductive paths arranged on two carriers, where each carrier is arranged to two details movable in respect to each other and where the conductive paths on the respective carrier are in contact with each other.

For transfer of electricity for a rotating device such as a robot swivel the conductive paths are preferably arranged as concentric rings and that the carriers are arranged at the end of the swivel adjacent one end of the distance member.

According to a further preferred alternative of the invention, it is characterised by a quick coupling between the swivel and tool and that this quick coupling preferably is arranged with electricity transfer means between the swivel and tool further, the electric transfer means may be capable of providing a feedback when the swivel and tool are properly attached to each other.

The advantages with the swivel according to the present invention are several. The cavity provides possibilities to integrate equipment that is protected against the environment, such as electronic control equipment.

Because the outer part, the outer sleeve, is made of a plastic material, a lower weight is obtained, and the plastic material of the outer sleeve acts as a bearing means relative the distance member. In the case that a number of channels for fluid are arranged next to each other in either the distance member or the outer sleeve, which run along the circumference of the respective component, the use of plastic provides further advantages in that the plastic has a larger expansion coefficient during heating than metal. In repeated turning whereby the outer sleeve is turned relative the distance member, the friction between the seals and the contact surface will cause an increase of heat. This heat increase in turn causes the plastic to expand, whereby a certain clearance arises between the seal and the contact surface, which in turn causes a certain small amount of fluid to pass past the seal. This in turn causes the passing fluid to cool the seal and the surrounding material, whereby the plastic retains its initial form and the seal again seals. In total, this heat expansion and the subsequent leakage and cooling provides a longer life for the seals than in the cases where the components do not expand to any extent due to heat.

Further advantage with the device according to present invention is that due to that the conductive paths of the carriers are in contact with each other a very compact device is obtained, which requires much less space than conventional devices. Further, a large contact surface between the conductive paths is obtained, which provides for relatively large currents to be transferred without the risk for breakdown.

Because contacts of coal have been omitted, no dust or debris is produced which may disturb the function. The wear is further minimal in comparison, which prolongs the service intervals.

By using pressure means, an even and constant pressure between the conductive paths is ascertained. In order to further ascertain a good contact between the conductive paths and decrease the influence of parallax errors between the carriers, these may be provided with stiffening means and/or flexibility means.

For certain applications with high speed between the carriers and/or applications where a lot of movement takes place continuously, it might be preferable to arrange transfer means in the form of roll bodies. By this design a reduced friction is obtained between the conductive paths at the same time as the device by necessity becomes somewhat higher.

Because the distance member preferably is designed as a circle cylindrical sleeve a large load carrying ability is obtained, whereby the distance member for most applications may be made of aluminium.

The space in the swivel may also be used for the placing of a quick coupling for tools. Because this preferably can be combined with electric transfer and coupling means this in all provides a very slim and compact solution. When also the electric coupling means can provide a feedback upon a proper connection of the swivel and the tool, a very secure coupling is obtained.

The quick coupling that the present invention preferably is arranged with provides additional advantages in relation to the state of the art. Because the balls are abutting spherical recesses, a large load and moment receiving surface is obtained, which enables the omission of moment carrying shafts and the like guides. The design of the recesses may for example by made with a radius milling tool, which provides a simpler and cost-effective manufacture.

These and other aspects of, and advantages with, the present invention will become apparent from the detailed description of preferred embodiments.

### SHORT DESCRIPTION OF THE DRAWINGS

In the following the invention will be described closer by a detailed description of preferred embodiments and with reference to the accompanying drawings, of which
- Fig. 1: shows a perspective view in cross-section of one embodiment of a swivel according to the present invention,
- Fig. 2: shows a perspective view of an electricity transferring device comprised in the invention,
- Fig. 3: shows the device according to Fig. 2 in a top view,
- Fig. 4: shows the device according to Fig. 2 in a side view,
- Fig. 5: shows the device according to Fig. 4 connected to a pressure means,
- Fig. 6: shows a detailed view taken from Fig. 5,
- Fig. 7: shows a detailed view of an alternative embodiment of the electricity transferring device,
- Fig. 8: shows a variant of the swivel according to Fig. 1 with a quick coupling unit,
- Fig. 9: shows a coupling part for connection to the quick coupling unit according to Fig. 8,
- Fig. 10: shows a cross-section of the swivel according to Fig. 8 with a connected coupling part, and
- Fig. 11: shows another variant of a swivel according to the invention with a valve slide integrated in this.

### DETAILED DESCRIPTION OF THE INVENTION

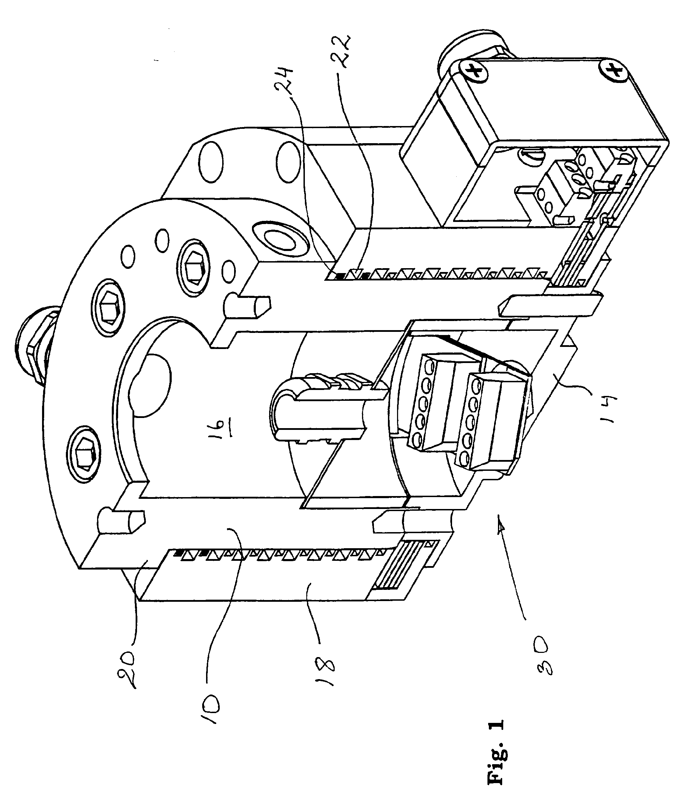

The swivel according to the invention shown in Fig. 1 comprises an inner part 10, hereafter named distance member, with a circle cylindrical outer surface along a major part of its extension in the longitudinal direction. In one end of the distance member an attachment plate 14 is attached, which in turn is attached to the rotatable end of the robot arm (not shown). The distance member is further provided with a cavity 16 stretching in the longitudinal direction mainly from one end to the other and arranged substantially in the centre of the distance member, in the embodiment shown as a circle cylindrical compartment, whereby the distance member substantially obtains the form of a circle cylindrical sleeve. The other end of the distance member is intended and arranged to attach a tool to.

Outside the distance member an outer sleeve 18 is arranged, the inner surface of which corresponds to the outer surface of the distance member with a certain distance so that the outer sleeve is rotatable around the distance member. The movement of the outer sleeve in the longitudinal direction is limited towards the tool attachment by a flange or abutment 20 formed in the distance member or attached to this, for example in a manner which will be described below. In the other direction the movement of the outer sleeve is limited by the attachment plate 14. In the inner surface of the outer sleeve a number of grooves 22 are arranged, which grooves run in the circumference of the inner surface. The grooves are to the sides sealed by suitable sealing means 24 which are in contact with the outer surface of the distance member, such as O-rings and the like. Only one sealing means is shown in Fig. 1.

The sealing means may in the contact with the distance member be provided with a material with a low friction coefficient such as PTFE. The grooves 22 are in communication with passages (not shown), which stretch to the outer surface of the outer sleeve where these are arranged with connections for the connection of fluids such as pressurised air, hydraulic oil, cutting fluid and the like. The distance member is also arranged with passages, not shown, from the grooves to connection points on the flange 20 for transfer of fluids from the device to the tool.

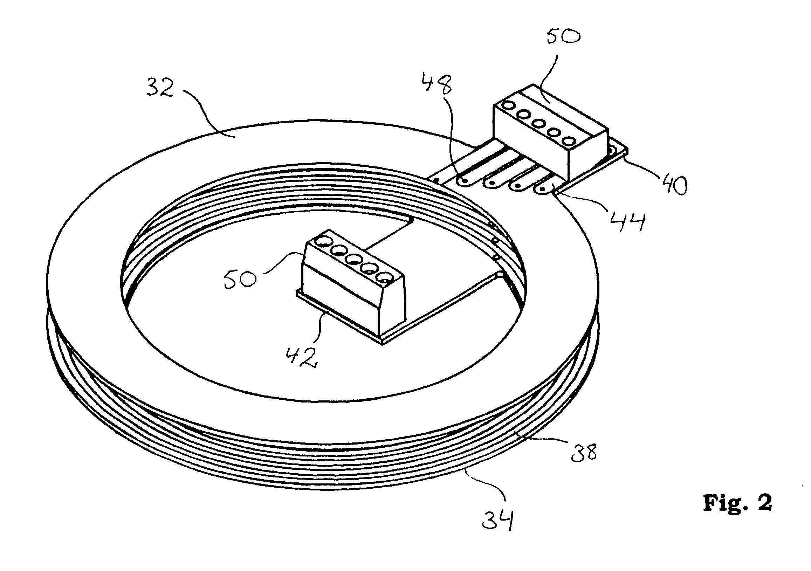

According to the embodiment shown in Fig. 1, the device according to the invention is designed with a device 30 for transfer of electricity in connection to the attachment plate. This comprises two thin plates or carriers 32, 34, Figs. 2-6, of non-conductive material, which in the embodiment shown have the form of rings. On each of the carrier's one side surface a number of conductive paths 36, 38 are arranged, by for example etching of a metal layer so that circular connections are obtained. Each carrier is further arranged with a tongue 40, 42 or the like, also these of a non-conductive material. Suitably the tongue is integrated with the carrier.

Each tongue is arranged with conductive paths 44, 46, the number of which corresponds to the number of circular conductive paths.

The paths on the tongue are arranged on the opposite side of the carrier as the circular conductive paths. Electrically conductive passages 48 are arranged between the circular conductive paths and the conductive paths of the tongue. Further, each tongue may be arranged with a connection socket 50 attached to the conductive paths of the tongue.

Each carrier may be arranged with stiffening means 52 in the form of material thickenings stretching radially over the side surface of the carrier on the opposite side as the circular conductive paths.

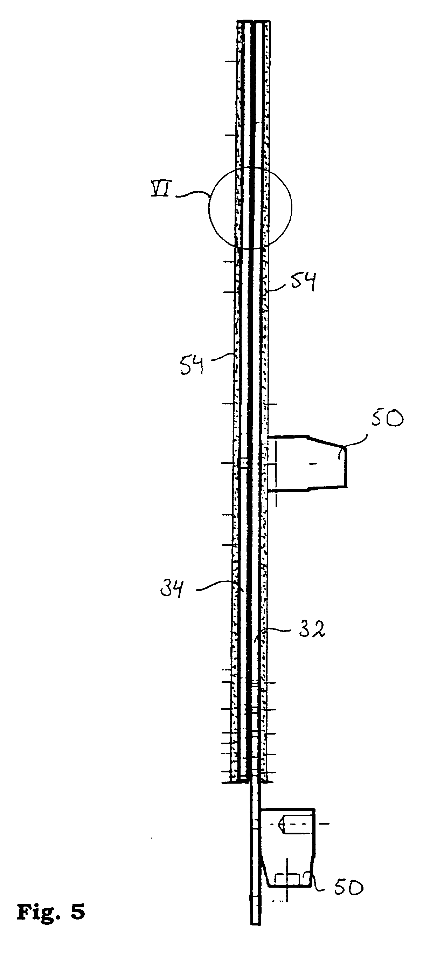

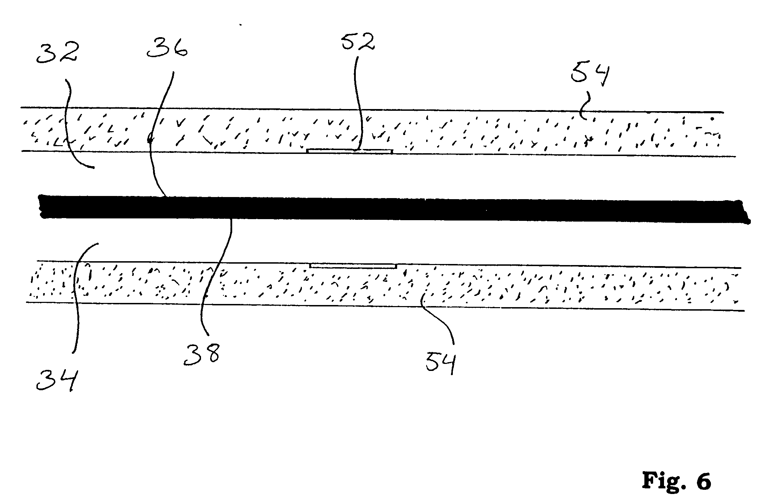

Each carrier is arranged with pressure means 54, Figs. 5 and 6, which are in contact with the surface opposite the conductive paths. The function of the pressure means is to press the carriers and their respective conductive paths against each other. The pressure means are in the embodiment shown made of an elastically resilient material providing an even pressure over the entire surface of the carrier. The stiffening means provides a local pressure increase, which ascertains that the contact is maintained during movement of the conductive paths. This also reduces the influence of parallax errors between the carriers.

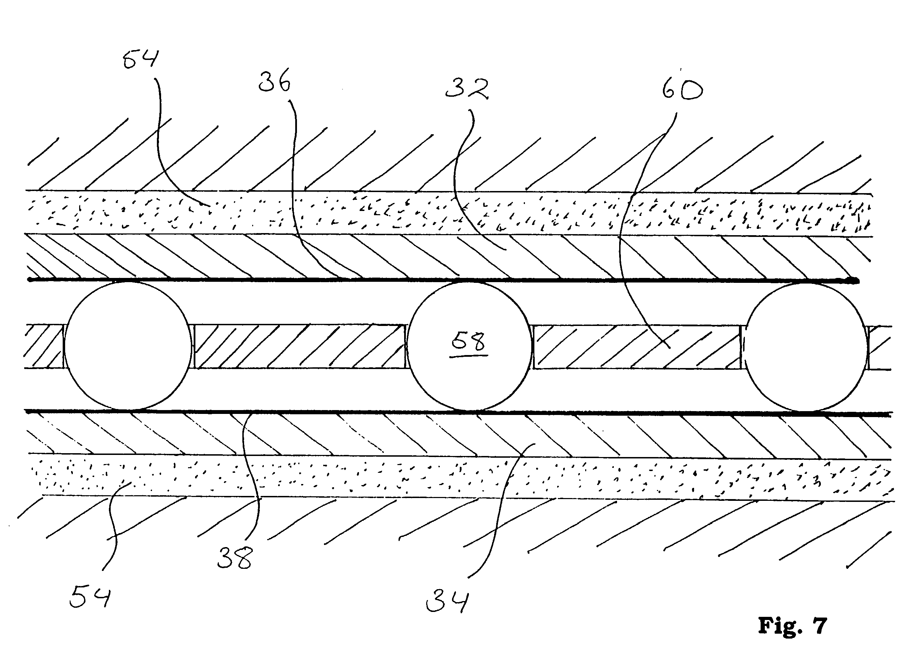

For certain applications, for example during high speeds and a lot of movements between the conductive paths and/or if one wishes a very long life, the device may be arranged with essentially inflexible transfer means, 58, Fig. 7. In the embodiment shown, these comprise balls, which are in contact against the respective conductive path of the carriers. In order to keep the balls in the right position a holder 60 is arranged with perforations, the sizes of which essentially coincides with the diameters of the balls. It is to be understood that other rotating means, such as for example rollers, may be used instead of balls.

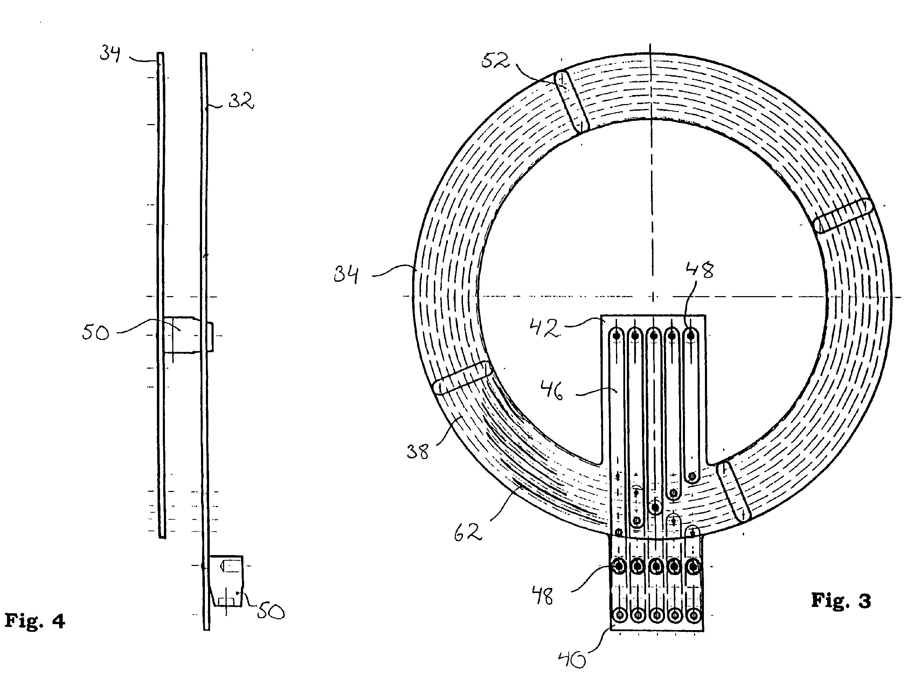

In certain cases it is conceivable to increase the flexibility of the carries in order to ascertain a good contact between the conductive paths. The carriers may in this case be arranged with slots 62, Fig. 3, between the contact paths in certain selected places.

The electricity transferring device shown in Figs. 2-6 consists of two carriers. In the swivel according to Fig. 1, the device is shown in double, i e two devices arranged on each other. This may be valuable if the application for example requires a large number of transfer channels, which, due the available space can not be fitted into one pair of carriers.

The conductive paths may be made of material alloys which, apart from good conductivity, also are resistant against wear, such as for example nickel plating.

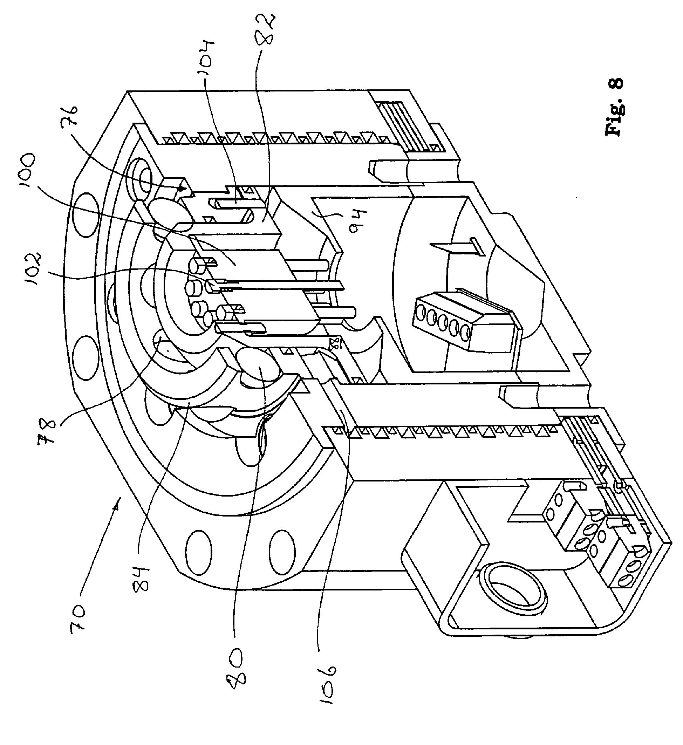

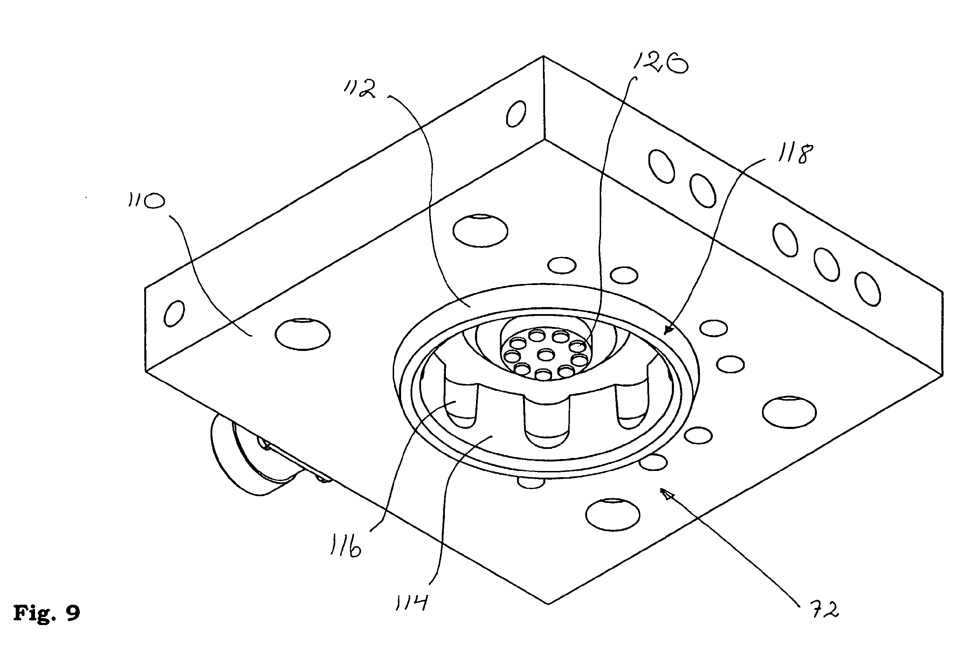

The Figs. 8-10 show a variant of the swivel according to the invention with a quick coupling for exchange of tools. The quick coupling comprises a first coupling part 70 attached to the swivel and a second coupling part 72 attached to the tool (not shown) or an adapter plate, Fig. 9. The first coupling part comprises a sleeve-like guide and grip part 74 which is arranged with a press fit in the cavity of the swivel with one end protruding somewhat from the end surface of the swivel. A groove 76 is arranged at the transition between the guide and grip part and the distance member. The guide and grip part has a circle cylindrical inner surface while its outer surface has a slightly decreasing diameter towards its outer end. Adjacent its outer end a number of through holes 78 are arranged around its circumference, in which holes balls 80 are arranged somewhat movable in the radial direction of the guide and grip part. A locking member 82 is arranged in the inner area of the guide and grip part. The locking member is arranged with a circle cylindrical outer surface with a diameter somewhat smaller than the inner diameter of the guide and grip part. The outer surface of the locking member is at its outer edge arranged with a bevel 84 around its circumference. A seal 86 is arranged between these surfaces.

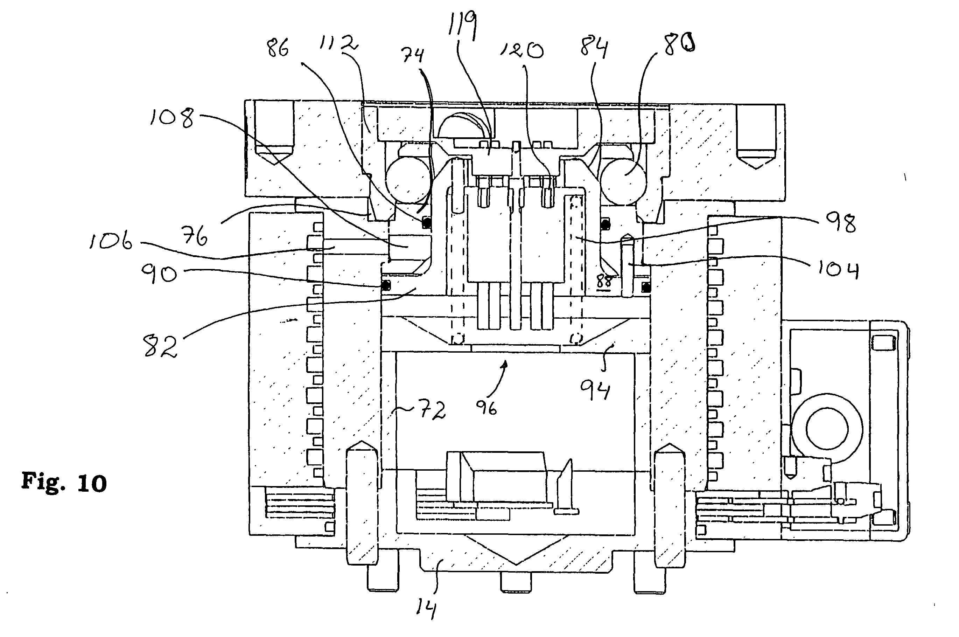

Further, the locking member is arranged with a flange 88 at its lower part, Fig. 10, with a diameter which is somewhat smaller than the diameter of the swivel cavity. A seal 90 is arranged between the flange and the surface of the cavity.

Further inside the cavity is a cylinder 72 arranged, which engages the attachment plate 14. Between the cylinder and the locking member an abutment is arranged 94, which has a central opening 96. A pressure spring 98, shown with broken lines in Fig. 10, is arranged between the abutment and a ledge on the inner surface of the locking member at its lower part. At the lower part of the locking member a contact block 100 with a number of electrical contact pins 102 is arranged, which contact pins protrude somewhat below the lower surface of the contact block. The contact pins are connected to electrical wires, which run in the compartment to the conductive paths. A guide pin 104 is arranged on the locking member, which fits in a corresponding hole in the grip and locking part. A passage 106 which is connected to a pressure source (not shown) is arranged between the space 108, which is formed between upper part of the guide and grip part and the lower surface of the flange of the locking member as well as to the channels formed in the outer sleeve.

The second coupling part comprises a plate 110 intended to be attached to a tool, with a central opening. A locking member 112 is pressed into the opening. The locking member comprises a cylindrical part with an inner surface 114 which has the same inclination as the outer surface of the lower protruding part of the guide and grip part. Further, the inner surface is designed with a number of spherical recesses 116, intended to receive the balls in the guide and grip part. The outer surface of the cylindrical portion at its upper edge is arranged with a bevel 118 around its circumference, whereby the upper edge is arranged to fit into the groove 76 of the first coupling part. A contact block 119 with a number of contact pins 120 are arranged centrally in the locking member. The contact pins are connected via electrical wires to different devices on the tool.

The function of the quick coupling is as follows. When a tool is to be connected to the swivel, pressurised air is fed to the space 108 in the first coupling part whereby the locking member 82 is pushed inwards in the swivel against the pressure force of the spring 98 until the flange is in contact with the abutment 94. This leads to that the bevel 84 at the lower edge of the locking member is in level with the through holes 78, whereby the balls 80 may be moved radially inwards. The swivel then docks with the tool whereby the cylindrical portion of the second coupling member is guided by the conical surfaces until its upper edge is fitted into the groove 76 of the first coupling member. In this position the spherical recesses 116 are in level with the balls 80. At the same time the contact pins of both coupling blocks 100, 119 have come in contact with each other. In this position the air supply is blocked whereby the locking member is forced downwards by the force of the spring and the balls are forced into the grooves due to the bevel 84 and the outer surface of the locking member. The tool is now locked to the swivel.

In order to obtain a predetermined angular position between the first and the second coupling member the balls and the recesses respectively are not made with the same pitch, where it is conceivable that one ball is arranged with another pitch than the others. The predetermined angular position is needed for the cases where the contact blocks have a certain configuration on the pins, and where different pins have specific functions. For this purpose the guide pin 104 on the locking member is fitted into the hole of the grip and locking part in order to prevent that the locking member with the contact blocks may be turned. The contact blocks may also have the function that one or some of the pins function as a feedback signal that the swivel and the tool have been docked in the right way and the right position. First when this feedback signal is obtained, one knows that the tool fixture is locked.

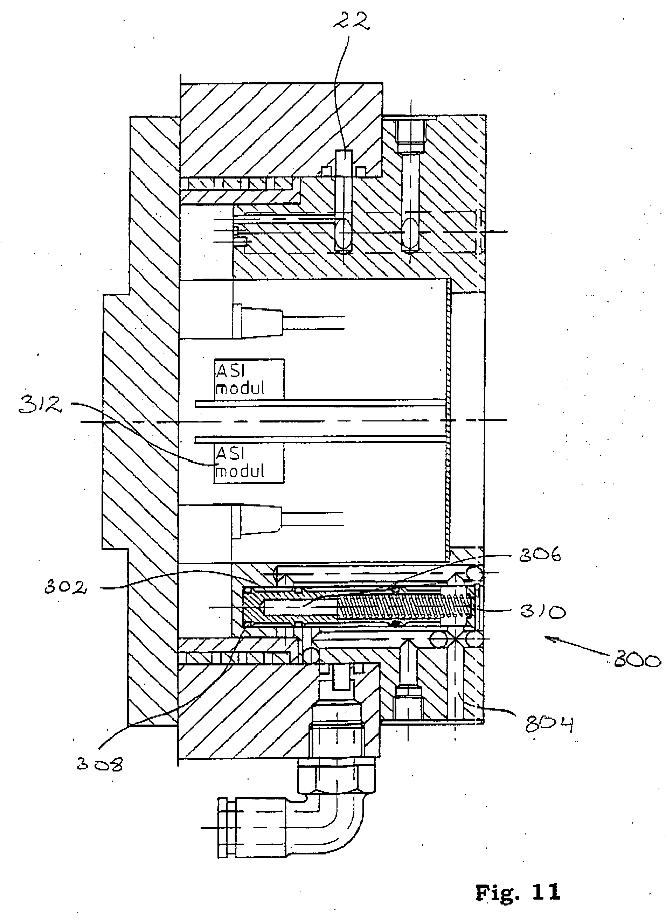

Fig. 11 shows a further variant of the swivel according to the invention. In this a valve 300 is integrated in the distance member, in the embodiment shown a single way valve. The valve comprises an elongated cylinder sleeve 302 in communication with partly a pressure source via the outer sleeve with its grooves and partly with a number of outlets and inlets 304 for transfer to the tool. In the cylinder sleeve is a piston 306 arranged with a number of piston rings 308. A pressure spring 310 is arranged between the piston and an end wall. A control member (not shown) is arranged to the other end of the piston. With a design according to this variant, valve functions may be integrated in the swivel and need thus not be arranged outside, either on the robot arm or on the tool, and there take up space.

Fig. 11 also shows the integration of a digital signal transferring unit, a so called ASI-unit 312. Digital signal transferring for the control and monitoring of tool and sensors arranged on this constitutes a central manoeuvre and control unit placed outside the working area of the robot. Further it comprises a number of nodes performing specific tasks. The nodes communicate with the central unit and with each other digitally over a two wire connection in the simplest case, and with a further two wires for the voltage supply. In the simplest case, only four wires are needed. With a swivel according to the invention one or more ASI-modules may be placed in the compartment in the swivel. This implies that the modules are placed close to the control and signal source as well as are placed protected against the environment.

It has been said earlier that the outer sleeve preferably is made of a plastic material. This is possible because it according to the present invention does not have to take up any loads. These are instead taken up by the generally cylindrically formed distance member, which for most applications may be made of aluminium. This combination thus provides for the robot to take care of larger useful loads.

It is to be understood that the present invention is not limited to the embodiments described in the detailed description and to the accompanying drawings but may be modified within the scope of the patent claims.

## Claims

1. Swivel for a robot comprising a fixture (14) for the attachment to the arm of a robot, a distance member (10) with a circle cylindrical outer surface attached to the fixture forming a first detail, fastening means arranged to said distance member for the attachment of a tool, an outer sleeve (18) slidably arranged outside the outer surface of said distance member forming a second detail, the distance member being provided with a cavity (16), which cavity stretches in the main direction of the distance member, the swivel further comprising a device for transfer of electricity between the two details, comprising a number of essentially inflexible conducive paths (38) arranged on a first carrier (34), which carrier is arranged to the first detail (10, 14), a number of essentially inflexible conductive paths (36) arranged on a second carrier (32), which carrier is arranged to the second detail (18), whereby the conductive paths are in contact with each other, and whereby the conductive paths stretch in the moving direction of the details, **characterised in that** elastically resilient pressure means (54) are arranged between at least one carrier and a respective detail, capable of pressing the carriers and the conducive paths against each other and that electrical means are arranged in the cavity for electrical transfer between the first carrier and the tool.

2. Device according to claim 1, **characterised in that** the pressure means is arranged for the respective carrier.

3. Device according to any of the preceding claims, **characterised in** essentially inflexible transfer means (58) arranged between the conductive paths of the two details.

4. Device according to claim 3, **characterised in that** the transfer means are formed as roll bodies.

5. Device according to claim 1, **characterised in that** stiffening members (52) are arranged on at least one of the carriers on opposite side as the conductive paths.

## Patentansprüche

1. Drehanschluss für einen Roboter umfassend ein Befestigungsorgan (14) zum Befestigen an den Arm eines Roboters, ein Distanzstück (10) mit einer runden, zylindrischen äußeren Oberfläche, das an dem Befestigungsorgan angebracht ist und ein erstes Element bildet, Befestigungseinricgtungen, die an dem Distanzstück zum Befestigen eines Werkzeugs vorgesehen sind, eine äußere Hülse (18), die verschiebbar auf der Außenseite der äußeren Oberfläche des Distanzstücks vorgesehen und ein zweites Element bildet,
wobei das Distanzstück einen Hohlraum (16) aufweist, der sich entlang der Hauptrichtung des Distanzstücks erstreckt,
wobei der Drehanschluss ferner eine Vorrichtung zum Leiten von Elektrizität zwischen den zwei Elementen aufweist, umfassend eine Anzahl von im Wesentlichen unflexiblen Leitungsspuren (38) auf einem ersten Träger (34),
wobei der Träger dem ersten Element (10, 14) zugeordnet ist, eine Anzahl von im Wesentlichen unflexiblen Leitungsspuren (36) auf einem zweiten Träger (32), wobei der Träger dem zweiten Element (18) zugeordnet ist,
wobei die Leitungsspuren miteinander in Kontakt stehen und sich in Bewegungsrichtung der Elemente erstrecken,
**dadurch gekennzeichnet, dass** ein elastisches Druckmittel (54) zwischen zumindest einem Träger und einem betreffenden Element angeordnet ist das die Träger die Leitungsspuren gegeneinander drücken kann, und dass elektrische Einrichtungen in dem Hohlraum für eine elektrische Verbindung zwischen dem ersten Träger und dem Werkzeug vorgesehen sind.

2. Die Vorrichtung gemäß Anspruch 1, **dadurch gekennzeichnet, dass** das Druckmittel bezüglich des betreffenden Trägers angeordnet ist.

3. Vorrichtung gemäß einer der vorangehenden Anspruche, **gekennzeichnet durch** im Wesentlichen nicht flexible Transfermittel (58), die zwischen den Leitungsspuren der beiden Elemente angeordnet sind.

4. Die Vorrichtung gemäß Anspruch 3, **dadurch gekennzeichnet, dass** die Transfermittel durch Rollkörper gebildet werden.

5. Vorrichtung gemäß Anspruch 1, **dadurch gekennzeichnet, dass** Versteifungsstücke (52) auf zumindest einem der Träger auf der den Leitungsspuren gegenüberliebenden Seite angeordnet sind.

## Revendications

1. Connexion rotative pour un robot comprenant un dispositif de fixation (14) pour la fixation au bras d'un robot, un élément d'espacement (10) avec une surface externe cylindrique fixée au dispositif de fixation formant un premier détail, un moyen de fixation disposé sur ledit élément d'espacement pour la fixation d'un outil, un manchon externe (18) disposé de manière coulissante à l'extérieur de la surface externe dudit élément d'espacement formant un second détail, l'élément d'espacement étant muni d'une cavité (16), cette cavité s'étendant dans la direction principale de l'élément d'espacement, la connexion rotative comprenant en outre un dispositif pour le transfert de l'électricité entre les deux détails, comprenant plusieurs chemins conducteurs (38) essentiellement inflexibles disposés sur un premier support (34), ce support étant disposé sur le premier détail (10, 14), plusieurs chemins conducteurs (36) essentiellement inflexibles disposés sur un second support (32), ce support étant disposé sur le second détail (18), moyennant quoi, les chemins conducteur sont en contact les uns avec les autres et moyennant quoi, les chemins conducteurs s'étendent dans la direction de déplacement des détails, **caractérisée en ce que** des moyens de pression élastiquement résilients (54) sont disposés entre au moins un support et un détail respectif, qui sont capables de comprimer les supports et les chemins conducteurs les uns contre les autres et **en ce que** des moyens électriques sont disposés dans la cavité pour le transfert électrique entre le premier support et l'outil.

2. Dispositif selon la revendication 1, **caractérisé en ce que** les moyens de pression sont conçus pour les supports respectifs.

3. Dispositif selon l'une des revendications précédentes, **caractérisé par** des moyens de transfert essentiellement inflexibles (58) disposés entre les chemins conducteurs des deux détails.

4. Dispositif selon la revendication 3, **caractérisé en ce que** les moyens de transfert sont conçus comme des corps de cylindres.

5. Dispositif selon la revendication 1, **caractérisé en ce que** des éléments de rigidification (52) sont disposés sur au moins un des supports sur des côtés opposés par rapport aux chemins conducteurs.
